# EUROPÄISCHE PATENTSCHRIFT

(11) **EP 1 607 781 B1**
(45) Veröffentlichungstag und Bekanntmachung des Hinweises auf die Patenterteilung: **16.02.2011**
(21) Anmeldenummer: 05007566.2
(22) Anmeldetag: 06.04.2005
(51) Int. Cl.: G02B 7/00, G02B 6/42, B81B 3/00

(54) **Anordnung eines mikrooptischen Bauelements auf einem Substrat, Verfahren zur Justierung der Anordnung und optisches System mit der Anordnung**
Assembly of micro-optical elements on a substrate, method for adjusting the assembly and optical system comprising the assembly
Ensemble d'éléments microoptiques sur un substrat, méthode pour le réglage de cet ensemble, et système optique comportant un tel ensemble

(30) Priorität: 28.05.2004 DE 102004026132; 05.08.2004 DE 102004038093
(43) Veröffentlichungstag der Anmeldung: 21.12.2005
(73) Patentinhaber: OSRAM Opto Semiconductors GmbH, 93055 Regensburg (DE)
(72) Erfinder: Steegmüller, Ulrich, 93059 Regensburg (DE); Kühnelt, Michael, 93051 Regensburg (DE); Schwarz, Thomas, 93051 Regensburg (DE)
(74) Vertreter: Epping - Hermann - Fischer

(56) Entgegenhaltungen:
- WO-A-84/04991
- US-A- 5 833 202
- PATENT ABSTRACTS OF JAPAN Bd. 012, Nr. 023 (P-658), 23. Januar 1988 (1988-01-23) -& JP 62 175933 A (OLYMPUS OPTICAL CO LTD), 1. August 1987 (1987-08-01)
- PATENT ABSTRACTS OF JAPAN Bd. 1996, Nr. 09, 30. September 1996 (1996-09-30) -& JP 08 122578 A (OKI ELECTRIC IND CO LTD), 17. Mai 1996 (1996-05-17)
- PATENT ABSTRACTS OF JAPAN Bd. 2000, Nr. 09, 13. Oktober 2000 (2000-10-13) -& JP 2000 180658 A (SUMITOMO ELECTRIC IND LTD), 30. Juni 2000 (2000-06-30)
- PATENT ABSTRACTS OF JAPAN Bd. 001, Nr. 032 (E-009), 29. März 1977 (1977-03-29) -& JP 51 126844 A (SUENAGA YASUHIRO), 5. November 1976 (1976-11-05)

## Beschreibung

Für mikrooptische Bauteile, beispielsweise Linsen, Prismen, Spiegel oder Frequenzverdoppler sind eine ganze Reihe von verschiedenen Justierverfahren entwickelt worden, die es ermöglichen die betreffenden mikrooptischen Bauteile in dem Strahlengang eines optischen Bauelements, beispielsweise eines Lasers zu justieren.

Aus der WO 96/15467 A1 ist ein mechanisches Befestigungssystem für mikrooptische Elemente bekannt, bei dem das jeweilige mikrooptische Element auf einer zentralen Plattform aufgebracht wird, die über jeweils mindestens ein Scharnier mindestens drei an der Plattform befestigbare Beine aufweist. Die Ausrichtung des mikrooptischen Elements auf der Plattform kann dadurch erfolgen, dass beispielsweise unter Zuhilfenahme von Manipulations- und Robotersystemen durch Justierung der mindestens drei Beine eine genaue Positionierung der Plattform erreicht wird. Ein Nachteil dieses Befestigungssystems besteht unter anderem darin, dass aufgrund der zumindest drei justierbaren Beine drei Elemente relativ zueinander positioniert werden müssen, so dass mittels dieses Befestigungssystems nur eine relativ aufwendige Justierung möglich ist.

Auch bekannt aus der JP 08122578 ist ein optisches Modul und sein Herstellungsverfahren.

Die Aufgabe der vorliegenden Erfindung besteht darin, eine Anordnung eines mikrooptischen Bauelements auf einem Substrat, ein Verfahren zur Justierung der Anordnung sowie ein optisches System mit der Anordnung zur Verfügung zu stellen, die bezüglich der oben genannten Nachteile verbessert sind.

Diese Aufgabe wird erfindungsgemäß durch eine Anordnung eines mikrooptischen Bauelements auf einem Substrat nach Anspruch 1 gelöst. Vorteilhafte Ausgestaltungen der Anordnung sowie ein Verfahren zur Justierung der Anordnung und ein optisches System mit der Anordnung sind Gegenstand weiterer Ansprüche.

Die Erfindung beschreibt eine Anordnung eines mikrooptischen Bauteils auf einem Substrat, bei der eine Justierverbindung zwischen dem Bauteil und dem Substrat vorhanden ist, die ein erstes und zweites Verbindungselement enthält. Dabei enthält die erste Justierverbindung eine erste Oberfläche und die zweite Justierverbindung eine zweite Oberfläche. Diese beiden Oberflächen passen zueinander und sind miteinander in Kontakt, wobei eine Justierung der beiden Verbindungselemente in einer begrenzten Anzahl vorgegebener, verschiedener Relativpositionen zueinander möglich ist. Diese Relativpositionen der beiden Verbindungselemente zueinander sind dabei durch eine erste Bewegung ineinander überführbar.

Dadurch ist es bei einer erfindungsgemäßen Anordnung besonders einfach möglich das erste und zweite Verbindungselement in verschiedene Dreh- und Kipppositionen zueinander zu bringen. Im Gegensatz zu dem mechanischen Befestigungssystem der WO 96/15467 A1 ist bei einer erfindungsgemäßen Anordnung lediglich eine justierbare Verbindung (zueinander passende in Kontakt befindliche erste und zweite Oberflächen der ersten und zweiten Verbindungselemente) vorhanden, so dass besonders einfach eine Justierung möglich ist. Dabei ist es möglich, dass das erste Verbindungselement beweglich im zweiten Verbindungselement gelagert ist.

Die zueinander passenden in Kontakt befindlichen ersten und zweiten Oberflächen können dabei so ausgestaltet sein, dass je nach Anforderung an die Justierbarkeit entweder nur eine freie Drehung der beiden Verbindungselemente zueinander, nur eine Kippung der beiden Verbindungselemente zueinander oder kombiniert eine freie Dreh- und Kippbarkeit der beiden Verbindungselemente zueinander gewährleistet ist.

Das mikrooptische Bauteil kann dabei entweder mit dem ersten oder zweiten Verbindungselement verbunden sein. Dementsprechend ist dann das Verbindungselement, das nicht mit dem mikrooptischen Bauteil verbunden ist mit dem Substrat verbunden. Somit resultiert eine besonders einfache Anordnung des mikrooptischen Bauteils auf dem Substrat. Je nach Anforderung an die Anordnung kann die Verbindung zwischen dem mikrooptischen Bauteil an das erste oder zweite Verbindungselement direkt erfolgen (direkter Kontakt des Bauteils mit dem Verbindungselement), oder es können weitere Elemente dazwischengeschaltet sein, die z.B. zusätzliche Freiheitsgrade der Bewegung ermöglichen. Das gleiche gilt entsprechend auch für die Verbindung zwischen dem Verbindungselement und dem Substrat.

Vorteilhafterweise ist bei einer erfindungsgemäßen Anordnung die erste Oberfläche des ersten Verbindungselements konvex und die zweite Oberfläche des zweiten Verbindungselements konkav ausgeformt. Aufgrund der zueinander passenden konvexen und konkaven Oberflächen der ersten und zweiten Verbindungselemente ist besonders einfach eine freie Dreh- und Kippbarkeit der beiden Verbindungselemente zueinander realisierbar. Im Sinne der Erfindung werden unter konvexen Oberflächen alle nach außen gewölbten Oberflächen verstanden, wobei diese nicht notwendigerweise Kreisbögen beziehungsweise Ellipsen sein müssen, sondern auch eine Vielzahl von anderen nach außen gewölbten Oberflächen, z.B. mit stiftförmigen Ausbuchtungen verwendet werden können, solange diese eine frei Dreh-und evtl. Kippbarkeit gewährleisten. Die konvexe Oberfläche kann auch ebene, gegeneinander abgewinkelte Flächenbereiche umfassen, die beispielsweise als Polygone ausgebildet sind.

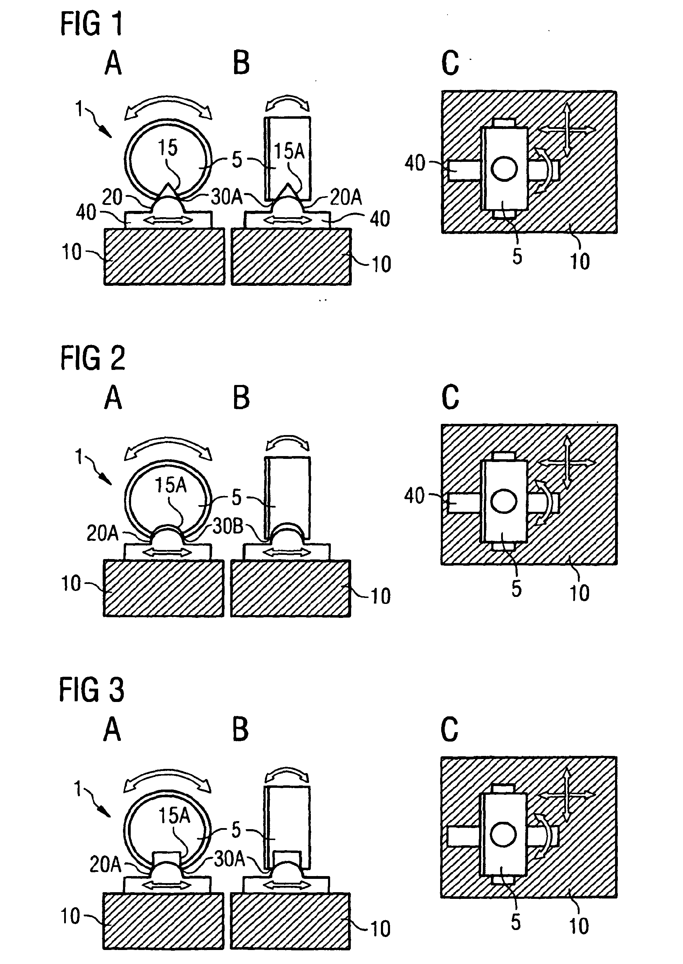

Dementsprechend werden unter konkaven Oberflächen auch alle nach innen gewölbten Oberflächen verstanden, wobei diese beispielsweise neben sphärischen Ausformungen auch zylindrische Bohrungen, Kegelmantelflächen und Rechtecknuten umfassen können (siehe beispielsweise Figuren 1, 9 und 10).

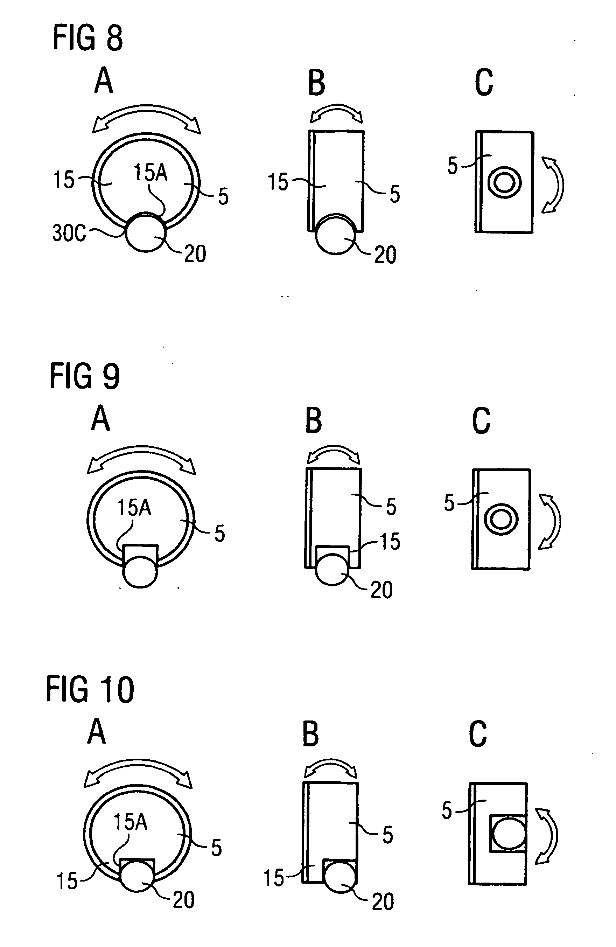

Je nach Ausgestaltung der ersten Oberfläche des ersten Verbindungselements und der zweiten Oberfläche des zweiten Verbindungselements können zwischen beiden Oberflächen entweder punktförmige, linienförmige oder flächenförmige Kontakte bestehen. Punktförmige Kontakte können beispielsweise zustande kommen, wenn ein Rechteck in einem Hohlsegment gelagert ist. Punktförmige Kontakte entstehen auch wenn eine konvexe Fläche in Kontakt mit einer konkaven Fläche steht, wobei für die Radien r gilt: rₖₒₙₖₐᵥ > rₖₒₙᵥₑₓ. Linienförmige Kontakte kommen beispielsweise bei einer Anordnung gemäß Figur 1 zustande, wenn das zweite Verbindungselement eine halbkugelförmige zweite Oberfläche aufweist und das erste Verbindungselement als erste Oberfläche eine Kegelmantelfläche umfasst. Linienförmige Kontakte zwischen der ersten und zweiten Oberfläche können beispielsweise auch dadurch realisiert werden, dass konvexe und konkave Oberflächen in Form von sphärischen Ausbeziehungsweise Einbuchtungen verwendet werden, die unterschiedliche Krümmungen aufweisen (siehe beispielsweise Figur 2). Flächenförmige Kontakte zwischen der ersten und zweiten Oberfläche kommen unter anderem zustande, wenn beide Oberflächen zueinander komplementär ausgebaut sind, wie dies beispielsweise in Figur 8 gezeigt ist. Dabei ist es aber auch möglich, dass die nach innen gewölbte konkave Oberfläche zusätzlich noch Einbuchtungen aufweist, die beispielsweise zur Aufnahme von Fixiermitteln, zum Beispiel Klebstoffen dienen können.

Eine besonders einfache Justierung des mikrooptischen Bauteils ist dann gegeben, wenn der Mittelpunkt der freien Dreh-und/oder Kippbarkeit des Bauteils mit dem Mittelpunkt der optisch wirksamen Fläche des mikrooptischen Bauteils zusammenfällt.

Weiterhin ist es besonders vorteilhaft, wenn die erfindungsgemäße Anordnung freitragend ist, also die mittels der Justierung eingestellten Positionen der ersten und zweiten Verbindungselemente zueinander ohne weitere Stütze fixiert sind. Dies kann beispielsweise dadurch erreicht werden, dass ein Fixiermittel vorhanden ist, das besonders vorteilhaft die beiden in Kontakt befindlichen ersten und zweiten Oberflächen relativ zueinander fixiert. Aufgrund dieser Fixierung resultiert damit auch eine stabile Relativposition zwischen den ersten und zweiten Verbindungselementen. Das Fixiermittel wird günstigerweise auf eine bzw. beide Oberflächen der ersten und zweiten Verbindungselemente aufgebracht. Andererseits ist es möglich, dass bereits ohne Fixiermittel eine freitragende erfindungsgemäße Anordnung erreicht wird. Dies kann beispielsweise dadurch geschehen, dass das zweite Verbindungselement zumindest teilweise das erste Verbindungselement umschließt, so dass eine besonders stabile "Gelenkverbindung" zwischen dem ersten und zweiten Verbindungselement resultiert. Weiterhin können die in Kontakt stehenden ersten und zweiten Oberflächen der ersten und zweiten Verbindungselemente derartige beschaffen sein, dass eine besonders hohe Reibung zwischen beiden Verbindungselementen resultiert, so dass alleine aufgrund der Reibung bereits eine relativ feste Fixierung bzw. freitragende Eigenschaft einer erfindungsgemäßen Anordnung erreicht werden kann. So können beispielsweise die ersten und zweiten Verbindungselemente einer Variante einer erfindungsgemäßen Anordnung Metalle umfassen, deren erste und zweite Oberflächen aufgeraut sind, so dass eine besonders hohe Reibung resultiert. Alternativ kommen auch Glas- oder Siliziumflächen in Frage. Diese Flächen können mittels geeigneter Vorbehandlungen ebenfalls besonders einfach aufgeraut werden. Weiterhin können die ersten und zweiten Verbindungselemente Kunststoffe umfassen, wobei dann ebenfalls besonders einfach die ersten und zweiten Kunststoffoberflächen aufgeraut werden können. Möglich ist auch eine Kombination aller oben genannten Materialien. So können beispielsweise erste Metall- und zweite Kunststoffoberflächen miteinander in Kontakt stehen.

Bei einer Ausführungsform einer erfindungsgemäßen Anordnung umfasst das erste Verbindungselement eine Kugel oder ein Halbkugelsegment mit einer entsprechenden sphärischen Oberfläche als erste Oberfläche. Derartige Verbindungselemente ermöglichen aufgrund ihrer sphärischen Ausformungen besonders einfach eine freie Dreh- und Kippbarkeit je nach der Ausformung des zweiten Verbindungselements.

Vorteilhafterweise weist das zweite Verbindungselement ein Hohlkugelsegment mit einer entsprechenden Oberfläche als zweite Oberfläche auf, in der das erste Verbindungselement gelagert ist. Ein Hohlkugelsegment ermöglicht dabei ebenfalls aufgrund seiner speziellen Ausformung eine freie Dreh- beziehungsweise Kippbarkeit der ersten und zweiten Verbindungselemente zueinander je nach Ausformung des ersten Verbindungselements.

Besonders vorteilhaft ist ein Kugelgelenk bei dem eine Kugelsegment beziehungsweise Halbkugelsegment als erstes Verbindungselement in einem Hohlkugelsegment als zweites Verbindungselement gelagert ist. Ein derartiges Kugelgelenk ermöglicht eine besonders stabile Lagerung bei gleichzeitig freier Dreh- und Kippbarkeit.

Entweder das erste oder das zweite Verbindungselement kann auf einem ersten Subträger angeordnet sein, der eine zusätzliche Relativbewegung zwischen Subträger und Substrat erlaubt. Dabei werden vorteilhafterweise zwei zusätzliche Freiheitsgrade der Translation über die Oberfläche des Substrats hinweg ermöglicht (siehe z.B. Figuren 1 bis 6). Dabei ist in der Regel das Verbindungselement auf dem beweglichen ersten Subträger angeordnet, das sich benachbart zum Substrat befindet. Diese durch den ersten Subträger ermöglichten Relativbewegungen können durch eine zweite Bewegung ineinander überführt werden.

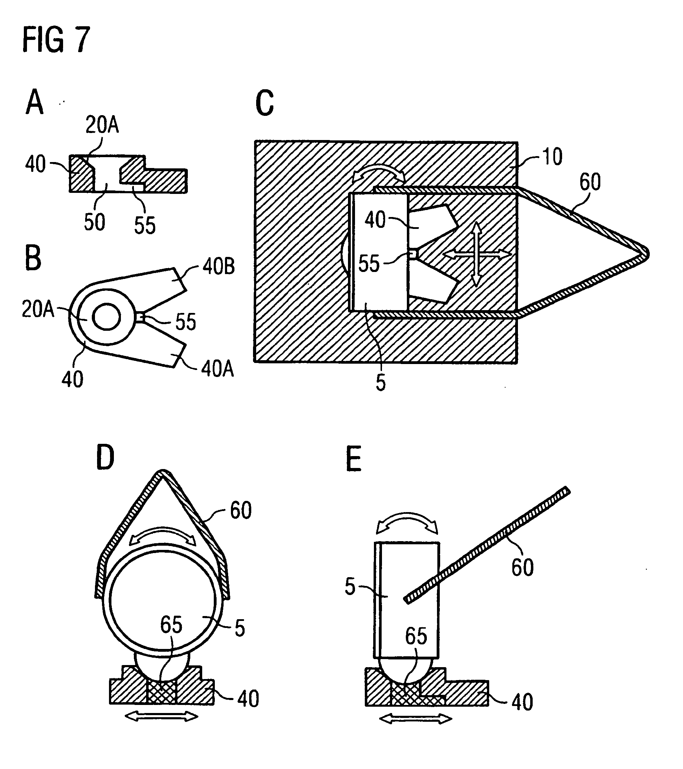

Der erste Subträger kann dabei zusätzlich einen Hohlraum aufweisen der ein Teil der Oberfläche des Verbindungselements sein kann das auf diesem ersten Subträger angeordnet ist. Dieser Hohlraum kann wie beispielsweise in Figur 7 gezeigt zur Aufnahme eines Fixiermittels, beispielsweise Klebstoffen oder Lotmetallen dienen, die eine Fixierung des ersten und zweiten Verbindungselements zueinander erlauben.

Im ersten Subträger ist zusätzlich ein Kanal vorhanden, der von der Oberfläche des ersten Subträgers bis zu der Oberfläche des Verbindungselements reicht, das auf dem ersten Subträger angeordnet ist. Ein derartiger Kanal ist beispielsweise ebenfalls in der Figur 7 dargestellt. Dieser Kanal kann zur nachträglichen Applizierung von Fixiermitteln an die Kontaktstellen zwischen den beiden Oberflächen verwendet werden, nachdem über eine Einstellung einer bestimmten Relativposition der beiden Verbindungselemente zueinander eine Justierung des mikrooptischen Bauteils auf dem Substrat stattgefunden hat. Weiterhin kann der Kanal zum Austreten von überschüssigem Fixiermittel während dessen Applikation dienen, bevor die beiden Oberflächen in Verbindung gebracht und justiert werden.

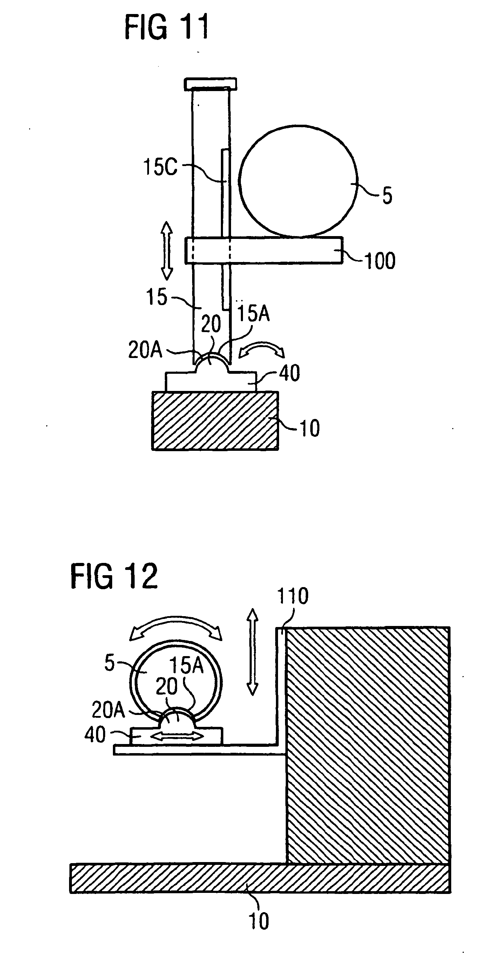

Weitere Freiheitsgrade der Bewegung des mikrooptischen Bauteils auf dem Substrat können dadurch erschlossen werden, dass besonders vorteilhaft ein zweiter Subträger vorhanden ist, auf dem das mikrooptische Bauteil angeordnet ist. Dieser Subträger ermöglicht dann eine Bewegung des mikrooptischen Bauteils relativ zur Oberfläche des Substrats unter Beibehaltung einer festen Relativposition zwischen erstem und zweitem Verbindungselement. Ein Beispiel einer derartigen erfindungsgemäßen Anordnung ist in Figur 11 dargestellt. Eine derartige Anordnung erlaubt zusätzlich zu den Freiheitsgraden der Drehung, Kippung und der Translation über die Oberfläche zusätzlich eine freie Einstellbarkeit der Höhe des mikrooptischen Bauteils über der Substratoberfläche. Um die Justierung des mikrooptischen Bauteils besonders flexibel zu gestalten, kann das Bauteil zusätzlich frei dreh- und/oder kippbar auf dem zweiten Subträger gelagert sein.

Steht eines der beiden ersten oder zweiten Verbindungselemente in Kontakt mit dem mikrooptischen Bauteil, so gibt es mehrere Möglichkeiten, dieses Verbindungselement an dem mikrooptischen Bauteil anzubringen. Beispielsweise besteht die Möglichkeit, das mikrooptische Bauteil in einem Gehäuse oder einer Fassung anzuordnen, die das Verbindungselement umfasst. Das Gehäuse beziehungsweise die Fassung kann beispielsweise Glas umfassen, so dass dann besonders einfach das Verbindungselement mittels Schleifens, Bohrens oder Fräsens aus dem Gehäuse oder Fassung ausgeformt werden kann. Alternativ ist es möglich das Gehäuse oder die Fassung aus einem Kunststoffteil zu formen und dabei entsprechend in einem Arbeitsschritt das Verbindungselement mit seiner jeweiligen Kontaktoberfläche zum weiteren Verbindungselement auszuformen. Alternativ ist es auch möglich eines der Verbindungselemente aus Formteilen, z.B. Spritzgussteilen herzustellen und dieses dann mittels Anfügens, zum Beispiel Klebens an dem mikrooptischen Bauteil zu befestigen. Wenn eines der Verbindungselemente auf dem ersten Substrat angeordnet wird, können dieser Subträger und das Verbindungselement günstigerweise in einem Schritt per Druck- oder Spritzgusstechniken aus Metallen oder Kunststoff geformt werden. Dabei sind auch Gieß- und Prägetechniken denkbar die beispielsweise auch bei Gläsern anwendbar sind. Alternativ ist aber auch eine separate Anfertigung des Verbindungselements und des ersten Subträgers möglich, wobei dieses Verbindungselement dann nachträglich an dem Subträger angefügt wird.

Zumindest eine der Oberflächen des ersten oder zweiten Verbindungselements kann eine Metallschicht aufweisen. Diese Metallschicht kann beispielsweise zur Fixierung einer Relativposition zwischen dem ersten und zweiten Verbindungselement nach der Justierung des mikrooptischen Bauteils auf dem Substrat dienen. Die Fixierung kann dadurch erfolgen, dass die Metallschicht aufgeschmolzen wird. Dazu umfasst die Metallschicht vorteilhafterweise ein Lotmetall das besonders leicht bei niedrigen Temperaturen geschmolzen werden kann. Vorteilhafterweise werden aber sowohl die erste Oberfläche des ersten Verbindungselements als auch die zweite Oberfläche des zweiten Verbindungselements mit einer Metallschicht versehen, wobei beim Aufschmelzen dieser Metallschichten dann besonders vorteilhaft eine enge Verzahnung beider Oberflächen und somit eine Fixierung resultiert.

Anstelle eines Metalls oder Lotmetalls als Fixiermittel können beispielsweise auch Klebstoffe verwendet werden. Diese können bereits vor der endgültigen Justierung des mikrooptischen Bauteils auf dem Substrat auf der ersten und/oder zweiten Oberfläche der Verbindungselemente aufgebracht werden und nach erfolgter Justierung beispielsweise mittels Erwärmens oder UV-Härtung ausgehärtet werden.

Das mikrooptische Bauteil einer erfindungsgemäßen Anordnung weist dabei in der Regel Ausdehnungen kleiner etwa 13 mm, bevorzugt kleiner etwa 5 mm auf. Abmessungen von kleiner etwa 1 mm sind ebenfalls möglich. Das mikrooptische Bauteil wird bei den meisten Anwendungen eine Ausdehnung zwischen 1 bis 5 mm aufweisen. Es kann dabei Laserspiegel, optische Filter, Polarisationskomponenten, Frequenzverdoppler, Verzögerungsplättchen Umlenkspiegel, Prismen, LEDs, Halbleiterlaser, Fotodioden oder Linsen umfassen.

Gegenstand der Erfindung ist weiterhin ein Verfahren zur Justierung eines mikrooptischen Bauteils auf einem Substrat wobei in einem Verfahrensschritt A) eine erfindungsgemäße Anordnung bereitgestellt wird. Die Anordnung enthält dabei ein erstes und ein zweites Verbindungselement, die zueinander passende in Kontakt befindliche erste und zweite Oberflächen aufweisen, die eine Justierung in verschiedenen Relativpositionen erlauben.
In einem anschließenden Verfahrensschritt B) wird das mikrooptische Bauteil auf dem Substrat durch Veränderung der Positionen der Verbindungselemente mittels Drehens und/oder Kippens der Verbindungselemente über ihre, sich kontaktierenden ersten und zweiten Oberflächen zueinander justiert.

In einem optionalen Verfahrensschritt C) können nach dem Verfahrensschritt B) die ersten und zweiten Verbindungselemente fixiert werden. Dies ist beispielsweise dann von besonderen Vorteil, wenn die erfindungsgemäße Anordnung nicht bereits von sich aus freitragend ist. Eine Fixierung kann beispielsweise dadurch erfolgen, dass ein Fixiermittel die ersten und zweiten Oberflächen zueinander fixiert. Alternativ können auch zusätzliche Stützen eingebracht werden die die Anordnung stabilisieren.

Im Verfahrensschritt B) kann das mikrooptische Bauteil mittels eines Greifarms, der beispielsweise Bestandteil eines robotergestützten Systems ist besonders einfach und schnell justiert werden.

Bei einer Ausführungsform eines erfindungsgemäßen Verfahrens wird im Verfahrensschritt A) auf zumindest einer der sich gegenüberliegenden Oberflächen des ersten oder zweiten Verbindungselements ein härtbarer Klebstoff aufgebracht und im Verfahrensschritt C) - nach der Justierung des Bauteils auf dem Substrat im Verfahrensschritt B) - gehärtet. Wie bereits oben beschrieben kann diese Härtung beispielsweise je nach Beschaffenheit des Klebstoffs mittels UV-Bestrahlung oder mittels Erhitzens erfolgen.

Alternativ zur Fixierung mittels eines Klebstoffs ist es auch möglich im Verfahrensschritt A) auf zumindest einer der sich gegenüberliegenden ersten und zweiten Oberflächen der Verbindungselemente eine Metallschicht zu erzeugen und dann im Verfahrensschritt C) nach der Justierung die Metallschicht aufzuschmelzen.

Im folgenden soll die Erfindung anhand von Ausführungsbeispielen und Figuren noch näher erläutet werden.
- Figuren 1 bis 6: zeigen Ausführungsformen einer Anordnung mit einem über das Substrat beweglichen ersten Subträger in der Frontalansicht, Seitenansicht und in der Aufsicht.
- Figur 7: zeigt in verschiedenen Positionen eine Ausführungsform einer erfindungsgemäßen Anordnung.
- Figuren 8 bis 10: zeigen in der Frontal-, Seiten- und in der Aufsicht erfindungsgemäße Anordnungen ohne Subträger.
- Figur 11: zeigt eine Ausführungsform einer Anordnung die einen ersten und einen zweiten Subträger enthält.
- Figur 12: zeigt eine weitere Ausführungsform einer Anordnung, die senkrecht zur Oberfläche des Substrats bewegbar ist.
- Figur 13: zeigt ein optisches System, das zumindest eine erfindungsgemäße Anordnung enthält.

In den nun beschriebenen Figuren 1 bis 6 und 8 bis 10 stellen die jeweiligen Teilfiguren A eine Frontalansicht der Anordnung, die Teilfiguren B eine Seitenansicht und die Teilfiguren C eine Aufsicht auf die jeweiligen Anordnungen dar.

Figur 1 zeigt dabei die Anordnung 1 eines mikrooptischen Bauteils 5 auf einem Substrat 10. Die Verbindung zwischen dem mikrooptischen Bauteil 5 und dem Substrat 10 kommt dabei über ein erstes Verbindungselement 15 und ein zweites Verbindungselement 20 zustande. Das erste Verbindungselement 15 ist dabei aus dem mikrooptischen Bauteil 5 gearbeitet und enthält eine Kegelfläche 15A als Lager (erste Oberfläche). In dieser ist dabei das zweite Verbindungselement 20 gelagert, das dabei eine konvexe sphärische Kontaktfläche 20A als zweite Oberfläche aufweist. Dabei entstehen zwischen der Kegelfläche 15A und der sphärisch konvex gekrümmten Fläche 20A linien- bzw. ringförmige Kontakte 30A. Das zweite Verbindungselement 20 ist dabei einstückig zusammen mit einem ersten Subträger 40 beispielsweise mittels Spritzgusses ausgeformt. Der Subträger 40 mit dem zweiten Verbindungselement 20 kann dabei frei über das Substrat 10 bewegt werden (Doppelpfeil) und auf diesem beispielsweise mittels Lötens oder Klebens fixiert werden. Möglich sind ebenfalls anodisches Bonden, z. B. Glas auf Silizium oder Glas auf Glas, Silicon-Fusion-Bonding und Schweißen. Der gekrümmte Doppelpfeil in Figur 1A deutet dabei eine mögliche Kippung des mikrooptischen Bauteils 5 die mittels dieser Lagerung erreicht werden kann an.

Die Seitenansicht der Figur 1B zeigt, dass neben einer seitwärts gerichteten Kippung wie in Figur 1A dargestellt ebenso eine Kippung nach vorne beziehungsweise nach hinten erfolgen kann (Doppelpfeil). In der Aufsicht der Figur 1C ist zu erkennen, dass neben den beiden Freiheitsgraden der Translation über das Substrat 10 (gekreuzte Doppelpfeile) mittels einer erfindungsgemäßen Anordnung auch eine Rotation (gekrümmter Doppelpfeil) des Bauteils 5 auf dem Subträger 40 möglich ist. Der weiße Kreis deutet dabei die eigentlich nicht sichtbare Lagerung des zweiten Verbindungselements im ersten Verbindungselement an.

Figur 2 zeigt eine weitere Ausführungsform einer Anordnung bei der die erste Oberfläche 15A des ersten Verbindungselements 15 eine konkav gekrümmte sphärische Oberfläche und die zweite Oberfläche 20A des zweiten Verbindungselements 20 eine konvex gekrümmte sphärische Oberfläche ist. Die konvex und konkav gekrümmten Oberflächen weisen dabei unterschiedliche Krümmungsradien auf, so dass linienförmige Kontakte 30B zwischen der ersten Oberfläche 15A und der zweiten Oberfläche 20A resultieren. Möglich sind auch punktförmige Kontakte, wenn eine konvexe Fläche in Kontakt mit einer konkaven Fläche steht, wobei für die Radien r gilt: rₖₒₙₖₐᵥ > rₖₒₙᵥₑₓ·

Bei der Anordnung gemäß Figur 3 stellt die erste Oberfläche 15A eine zylindrische Bohrung und die zweite Oberfläche 20A eine konvex gekrümmte sphärische Oberfläche dar. Bei einer derartigen Kombination von ersten und zweiten Oberflächen resultieren ähnlich wie in Figur 1 linien- bzw. ringförmige Kontakte 30A zwischen der ersten Oberfläche 15A und der zweiten Oberfläche 20A.

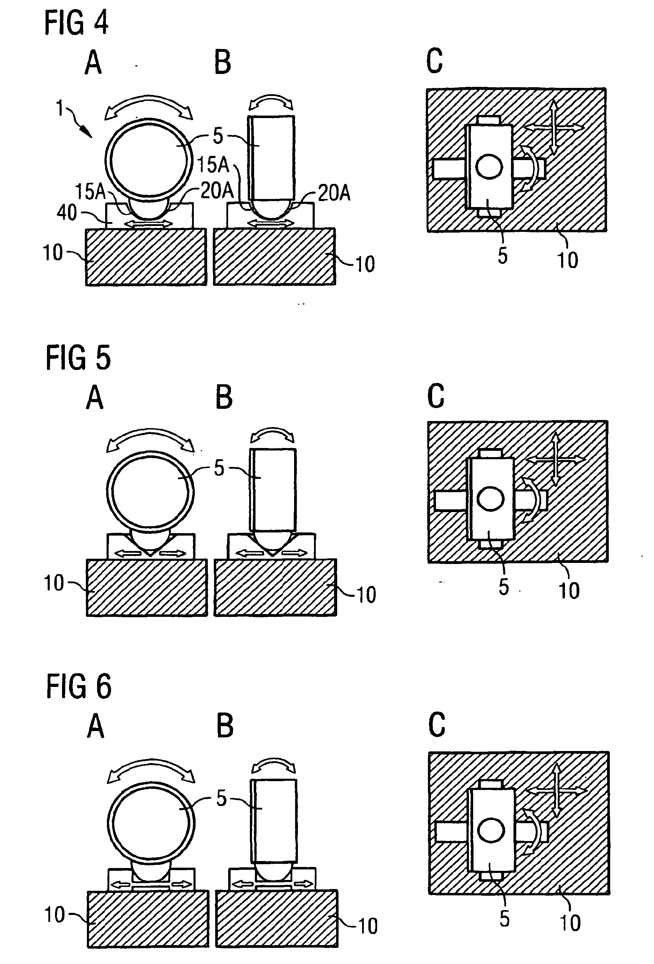

Im Gegensatz zu den Figuren 1 bis 3, bei denen das zweite Verbindungselement eine konvex nach außen gewölbte sphärische Oberfläche auf einem ersten Subträger 40 umfasst, sind in dem Figuren 4 bis 6 Subträger 40 dargestellt, deren zweite Verbindungselemente konkav nach innen gewölbte sphärische Verbindungsflächen 20A aufweisen. Diese zweiten Oberflächen 20A können dabei sphärisch konkav gekrümmt sein wie in Figur 4 dargestellt, sie können Kegelmantelflächen gemäß Figur 5 oder zylindrische Bohrungen wie in Figur 6 gezeigt, umfassen.

Figur 7A zeigt in der Seitenansicht eine Ausführungsform eines ersten Subträgers 40 mit einem zweiten Verbindungselement 20 dessen zweite Oberfläche 20A kegelförmig konkav ausgeformt ist. Diese Oberfläche geht dabei direkt in einen Hohlraum 50 über der mit einem Kanal 55 verbunden ist. Dieser Kanal 55 reicht wie in der Aufsicht der Figur 7B dargestellt zur Oberfläche des ersten Subträgers zwischen zwei Schenkeln 40A, 40B des ersten Subträgers 40. Dieser Kanal 55 kann dazu dienen nach erfolgter Justierung der ersten und zweiten Verbindungselemente diese mittels nachträglicher Applizierung eines Klebstoffes zu fixieren. Eine weitere Funktion dieses Kanals 55 kann darin bestehen, überschüssiges Fixiermittel austreten zu lassen. Die Aufsicht der Figur 7C zeigt dabei, wie mittels eines Greifarms 60 das optische Bauteil 5 auf dem ersten Subträger 40 mittels Rotation (gekrümmter Doppelpfeil) justiert werden kann. Die Frontalansicht der Figur 7D und die Seitenansicht der Figur 7E zeigen anschaulich wie mittels verschiedener Positionen des Greifarms 60 zusätzlich seitliche beziehungsweise nach vorn oder nach hinten gerichtete Kippbewegungen des mikrooptischen Bauteils 5 ausgeführt werden können (gekrümmte Doppelpfeile). Im Hohlraum 50 kann dabei bereits während der Justierung des mikrooptischen Bauteils 5 ein Fixiermittel 65 angeordnet sein (beispielsweise Lotmetall oder Klebstoff) das nach erfolgter Justierung mittels Schmelzens (Lotmetall) oder Aushärtens (Klebstoff) für eine Fixierung der ersten und zweiten Verbindungselemente sorgt.

Die Figuren 8 bis 10 zeigen ein zweites Verbindungselement 20 in Form eines Mikroballs, der direkt auf ein Substrat 20 montiert werden kann. Bei diesen Ausführungsformen ist somit keine Bewegbarkeit über die Oberfläche des Substrats mittels eines Subträgers 40 mehr möglich.

In Figur 8A bis 8C enthält das erste Verbindungselement 15 dabei eine Hohlkugel mit entsprechender Hohlkugelfläche 15A als erste Oberfläche, so dass ein Kugelgelenk resultiert, das besonders einfach eine freie Dreh- und Kippbarkeit ermöglicht. Bei entsprechender Ausgestaltung der ersten und zweiten Oberflächen der Hohlkugel beziehungsweise des Mikroballs des zweiten Verbindungselements 20 kann dabei bereits eine freitragende Anordnung resultieren.

Figur 9 zeigt eine Kombination aus einer zylindrischen Bohrung 15 mit erster Oberfläche 15A und einem Mikroball 20.

Figur 10 zeigt eine Kombination aus einer Rechtecknut 15 mit entsprechender Oberfläche 15A als erstes Verbindungselement und einem Mikroball 20 als zweites Verbindungselement.

In Figur 11 ist ein erster Subträger 40, auf dem ein zweites Verbindungselement 20 mit einer konvex sphärischen Oberfläche 20A ausgebildet ist, mit einem zweiten Subträger 100 kombiniert. Dabei ist wie bei allen anderen vorausgegangen Ausführungsformen das erste Verbindungselement 15 über eine konkav sphärisch gekrümmte Oberfläche 15A beweglich im zweiten Verbindungselement 20 gelagert. An diesem ersten Verbindungselement 15 ist dabei über eine Führungsschiene 15C relativ zur Oberfläche des Substrats 10 beweglich verschiebbar der zweite Subträger 100 gelagert an dem das mikrooptische Bauteil 5 befestigt ist. Eine derartige Anordnung ermöglicht immer noch eine relative Positionierung des mikrooptischen Bauteils 5 relativ zur Oberfläche des Substrats 10 (gerader Doppelpfeil) sobald eine feste Relativposition des ersten Verbindungselements 15 zum zweiten Verbindungselement 20 eingenommen wurde. Ebenso wie die ersten und zweiten Kontaktflächen 15A und 20A kann auch die Kontaktfläche zwischen dem ersten Verbindungselement 15 und dem zweiten Subträger 100 bereits von sich aus freitragend sein oder nach erfolgter Justierung mittels eines Fixiermittels fixiert werden.

Figur 12 zeigt eine weitere Anordnung, die eine relative Positionierung des mikrooptischen Bauteils 5 relativ zur Oberfläche des Substrats 10 ermöglicht. Das mikrooptische Bauteil 5 ist dabei über den ersten Subträger 40, auf dem es beweglich gelagert ist, auf einem senkrecht zur Oberfläche bewegbaren Schlitten 110 angeordnet. Diese mögliche Bewegung ist durch den senkrechten Doppelpfeil angedeutet. Anstelle der in Fig. 12 gezeigten ersten und zweiten Oberflächen 20A, 15A können auch die in den anderen Figuren dargestellten anderen Oberflächenpaare 20A, 15A in dieser Anordnung verwendet werden.

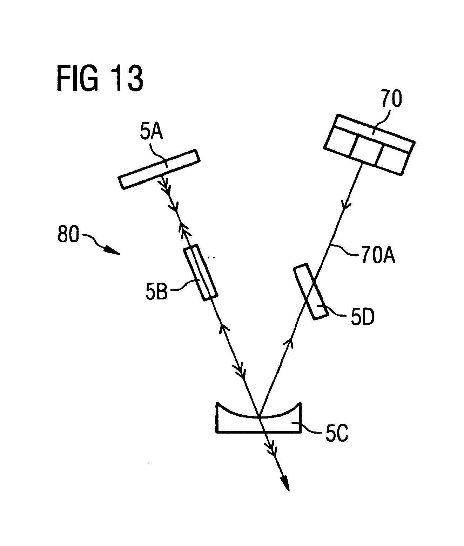

Solche Anordnungen, insbesondere die in den Figuren 1 bis 12 gezeigten Anordnungen können Bestandteil eines optischen Systems 80 sein, das in Figur 13 in der Aufsicht gezeigt ist. Dieses optische System enthält dabei ein optisches Bauelement 70, beispielsweise einen Laser, insbesondere einen Halbleiter-Scheibenlaser wie er in der Druckschrift WO 01/93386 A1 beschreiben wird, auf die hiermit voll inhaltlich Bezug genommen wird. Dieses optische Bauelement 70 erzeugt durch Emission von Strahlung einen Strahlengang 70A. Mittels einer erfindungsgemäßen Anordnung können mikrooptische Bauelemente 5A, 5B, 5C, 5D im Strahlengang 70A angeordnet und gegebenenfalls exakt justiert werden. Das Bezugszeichen 5A kennzeichnet dabei eine erfindungsgemäße Anordnung die einen externen Spiegel enthält. Das Bezugszeichen 5C kennzeichnet dabei eine erfindungsgemäße Anordnung die einen teildurchlässigen konkaven Umlenkspiegel zur Umlenkung des Strahlengangs 70A enthält. Die mit 5B und 5D gekennzeichneten Anordnungen enthalten dabei Frequenzverdoppler (5B) beziehungsweise Frequenzselektive Elemente (5B).

Die Erfindung beschränkt sich nicht auf die hier gezeigten Ausführungsbeispiele. Weitere Ausführungsformen sind beispielsweise hinsichtlich der Ausgestaltung der beiden zueinander passenden ersten und zweiten Oberflächen möglich.

## Patentansprüche

1. Anordnung (1) eines mikrooptischen Bauteils (5) auf einem Substrat (10), die Anordnung umfassend:
- ein Substrat (10),
- ein mikrooptisches Bauteil (5),
- einen ersten Subträger (40), und
- eine Justier-Verbindung zwischen dem mikrooptischen Bauteil (5) und dem Substrat (10),
wobei die Justier-Verbindung ein erstes (15) und ein zweites (20) Verbindungselement enthält, die zueinander passende, in Kontakt befindliche erste (15A) und zweite (20A) Oberflächen aufweisen, die eine Justierung in verschiedenen Relativpositionen erlauben und die eine Kippung des mikrooptischen Bauteils (5) nach vorne, hinten und seitwärts erlauben,
bei der entweder das erste (15) oder zweite (20) Verbindungselement auf dem ersten Subträger (40) angeordnet ist, womit eine Rotation des mikrooptischen Bauteils relativ zu dem ersten Subträger (40), und wobei der Subträger (40) frei über das Substrat (10) bewegt werden kann,
wobei im ersten Subträger zusätzlich ein bis zur Oberfläche des ersten Subträgers (40) reichender Kanal (55) vorhanden ist, der bis zur ersten (15A) oder zweiten (20A) Oberfläche des Verbindungselements reicht, das auf dem ersten Subträger angeordnet ist,
wobei dieser Kanal (55) dazu dienen kann, nach erfolgter Justierung der ersten und zweiten Verbindungselemente diese mittels nachträglicher Applizierung eines Fixiermittels zu fixieren, und wobei über den Kanal (55) überschüssiges Fixiermittel austreten kann.

2. Anordnung (1) nach dem vorhergehenden Anspruch,
- wobei die erste Oberfläche (15A) des ersten Verbindungselements (15) konvex und die zweite Oberfläche (20A) des zweiten Verbindungselements (20) konkav ausgeformt ist.

3. Anordnung nach einem der vorhergehenden Ansprüche,
- bei der zwischen der ersten (15A) und zweiten (20A) Oberfläche punktförmige Kontakte (30A) bestehen.

4. Anordnung nach einem der vorhergehenden Ansprüche,
- bei der zwischen der ersten und zweiten Oberfläche linienförmige Kontakte (30B) bestehen.

5. Anordnung nach einem der vorhergehenden Ansprüche,
- wobei zwischen der ersten und zweiten Oberfläche flächenförmige Kontakte (30C) bestehen.

6. Anordnung nach einem der Ansprüche 1, 2 oder 5,
- wobei die erste (15A) und zweite (20A) Oberfläche zueinander komplementär ausgeformt sind.

7. Anordnung nach einem der vorhergehenden Ansprüche,
- bei der die Oberfläche des ersten Verbindungselements eine Kugeloberfläche oder einen Teil davon umfasst.

8. Anordnung nach dem vorhergehenden Anspruch,
- bei der das zweite Verbindungselement eine Hohlkugel aufweist, in der das erste Verbindungselement gelagert ist.

9. Anordnung nach einem der vorhergehenden Ansprüche,
- wobei der Subträger (40) zusätzlich einen Hohlraum (50) aufweist dessen Innenflächen ein Teil der Oberfläche (20A) des Verbindungselements (20) sind, das auf dem ersten Subträger angeordnet ist.

10. Anordnung nach einem der vorhergehenden Ansprüche,
- wobei der erste Subträger (40) zwei Schenkel (40A, 40B) aufweist und
- wobei der Kanal (55) zwischen die zwei Schenkel (40A, 40B) des ersten Subträgers (40) zur Oberfläche des ersten Subträgers (40) reicht.

11. Anordnung nach einem der vorherigen Ansprüche,
- wobei ein zweiter Subträger (100) vorhanden ist, auf dem das mikrooptische Bauteil (5) angeordnet ist, wobei dieser Subträger eine Bewegung des mikrooptischen Bauteils relativ zur Oberfläche des Substrats (10) unter Beibehaltung einer Relativposition zwischen ersten (15) und zweiten (20) Verbindungselement erlaubt.

12. Anordnung nach einem der vorhergehenden Ansprüche,
- bei der das zweite Verbindungselement eine konkave Auflagefläche zur Lagerung des ersten Verbindungselements mit folgenden Formen aufweist:
- Kegelmantelfläche, zylindrische Bohrung, oder Rechtecknut.

13. Anordnung nach einem der vorhergehenden Ansprüche,
- bei der das erste Verbindungselement (15) an dem mikrooptischen Bauteil (5) angebracht ist.

14. Anordnung nach einem der vorhergehenden Ansprüche,
- wobei zumindest eine Oberfläche des ersten oder zweiten Verbindungselements eine Metallschicht, Glas, Silizium oder Kunststoff aufweist.

15. Anordnung nach einem der vorhergehenden Ansprüche,
- wobei das erste und zweite Verbindungselement aufgeraut sind.

16. Anordnung nach einem der vorhergehenden Ansprüche,
- wobei das mikrooptische Bauteil (5) in einem Gehäuse angeordnet ist, das entweder das erste (15) oder zweite (20) Verbindungselement umfasst.

17. Anordnung nach einem der vorhergehenden Ansprüche,
- wobei das mikrooptische Bauteil (5) einen Laserspiegel, ein optisches Filter, Polarisationskomponenten, Frequenzverdoppler, Verzögerungsplättchen oder eine Linse umfasst.

18. Anordnung nach einem der vorhergehenden Ansprüche,
- bei der das erste und zweite Verbindungselement relativ zueinander fixiert sind.

19. Anordnung nach dem vorhergehenden Anspruch,
- bei der das erste und zweite Verbindungselement mittels eines Fixiermittels (65) fixiert sind, das ausgewählt ist aus:
- Metall und Klebstoff.

20. Verfahren zur Justierung eines mikrooptischen Bauteils (5) auf einem Substrat (10) mit den Verfahrensschritten:
A) Bereitstellen einer Anordnung (1) nach einem der Ansprüche 1 bis 17,
B) anschließendes Justieren des mikrooptischen Bauteils (5) durch Veränderung der Positionen der Verbindungselemente (15, 20) zueinander.

21. Verfahren nach dem vorhergehenden Anspruch,
- wobei in einem nach B) stattfindenden Verfahrensschritt C) die ersten (15) und zweiten (20) Verbindungselemente gegeneinander fixiert werden.

22. Verfahren nach einem der Ansprüche 20 oder 21,
- wobei im Verfahrensschritt B) das mikrooptische Bauteil (5) in einem Strahlengang (70A) eines optischen Bauelements (70) mittels eines Greifarms (60) justiert wird.

23. Verfahren nach einem der Ansprüche 20 bis 22,
- bei dem im Verfahrensschritt A) auf zumindest einer der sich gegenüberliegenden Oberflächen des ersten und/oder zweiten Verbindungselements ein härtbarer Klebstoff aufgebracht wird,
- bei dem im Verfahrensschritt C) der Klebstoff gehärtet wird.

24. Verfahren nach einem der Ansprüche 20 bis 22,
- wobei im Verfahrensschritt A) auf zumindest einer der sich gegenüberliegenden Oberflächen des ersten und/oder zweiten Verbindungselements eine Metallschicht erzeugt wird,
- bei dem im Verfahrensschritt C) die Metallschicht aufgeschmolzen wird.

25. Optisches System (80), enthaltend
- zumindest ein optisches Bauelement (70) und
- zumindest eine Anordnung (5A, 5B, 5C, 5D) nach einem der Ansprüche 1 bis 19, die im Strahlengang (70A) des optischen Bauelements (70) angeordnet ist.

26. Optisches System nach dem vorhergehenden Anspruch,
- bei dem das optische Bauelement einen Laser, insbesondere einen HL-Scheibenlaser, umfasst.

## Claims

1. Arrangement (1) of a microoptical component (5) on a substrate (10), the arrangement comprising:
- a substrate (10),
- a microoptical component (5),
- a first submount (40), and
- an adjustment connection between the microoptical component and the substrate, the adjustment connection containing a first (15) and a second (20) connection element, which, matching one another, have first (15A) and second (20A) surfaces which are in contact and allow adjustment in different relative positions, and which allow the microoptical component (5) to be tilted forwards, backwards and sideways,
in which either the first (15) or the second (20) connection element is arranged on the first submount (40), thus allowing rotation of the microoptical component relative to the first submount (40), and in which case the submount (40) can be moved freely over the substrate (10),
where a channel (55) additionally being provided in the first submount, which channel (55) extends to the surface of the first submount (40) and extends to the first (15A) or second (20A) surface of the connection element which is arranged on the first submount,
in which case this channel (55) can be used, after the first and second connection elements have been adjusted, to fix these connection elements by means of subsequent application of a fixing means, and in which case excess fixing means can escape via the channel (55).

2. Arrangement (1) according to the preceding claim,
- with the first surface (15A) of the first connection element (15) being convex, and the second surface (20A) of the second connection element (20) being concave.

3. Arrangement according to one of the preceding claims,
- in which there are point contacts (30A) between the first (15A) and the second (20A) surface.

4. Arrangement according to one of the preceding claims,
- in which there are line contacts (30B) between the first and the second surface.

5. Arrangement according to one of the preceding claims,
- in which there are flat contacts (30C) between the first and the second surface.

6. Arrangement according to one of Claims 1, 2 or 5,
- with the first (15A) and the second (20A) surface being complementary to one another.

7. Arrangement according to one of the preceding claims,
- in which the surface of the first connection element comprises a spherical surface or a part of a spherical surface.

8. Arrangement according to the preceding claim,
- in which the second connection element has a hollow sphere in which the first connection element is mounted.

9. Arrangement according to one of the preceding claims,
- with the submount (40) additionally having a cavity (50) whose internal surfaces are a part of the surface (20A) of the connection element (20) which is arranged on the first submount.

10. Arrangement according to one of the preceding claims,
- with the first submount (40) having two legs (40A, 40B) and
- with the channel (55) extending between the two legs (40A, 40B) of the first submount (40) to the surface of the first submount (40).

11. Arrangement according to one of the preceding claims,
- with a second submount (100) being provided on which the microoptical component (5) is arranged, with this submount allowing movement of the microoptical component relative to the surface of the substrate (10) while maintaining the relative position between the first (15) and the second (20) connection element.

12. Arrangement according to one of the preceding claims,
- in which the second connection element has a concave contact surface for supporting the first connection element with the following shapes:
- a conical casing surface, a cylindrical hole, or a rectangular groove.

13. Arrangement according to one of the preceding claims,
- in which the first connection element (15) is fitted to the microoptical component (5).

14. Arrangement according to one of the preceding claims,
- with at least one surface of the first or second connection element having a metal layer, glass, silicon or plastic.

15. Arrangement according to one of the preceding claims,
- with the first and second connection elements being roughened.

16. Arrangement according to one of the preceding claims,
- with the microoptical component (5) being arranged in a housing which surrounds either the first (15) or the second (20) connection element.

17. Arrangement according to one of the preceding claims,
- with the microoptical component (5) comprising a laser mirror, an optical filter, polarization components, frequency doublers, delay platelets or a lens.

18. Arrangement according to one of the preceding claims,
- in which the first and the second connecting elements are fixed relative to one another.

19. Arrangement according to the preceding claim,
- in which the first and the second connection elements are fixed by means of a fixing means (65) which is selected from:
- metal and adhesive.

20. Method for adjustment of a microoptical component (5) on a substrate (10), having the following method steps:
A) provision of an arrangement (1) according to one of Claims 1 to 17,
B) subsequent adjustment of the microoptical component (5) by variation of the positions of the connection elements (15, 20) with respect to one another.

21. Method according to the preceding claim,
- with the first (15) and second (20) connection elements being fixed with respect to one another in a method step C) which takes place after B).

22. Method according to one of Claims 20 or 21,
- with the microoptical component (5) being adjusted by means of a gripping arm (60) in a beam path (70A) of an optical component (70) in the method step B).

23. Method according to one of Claims 20 to 22,
- in which a curable adhesive is applied to at least one of the mutually opposite surfaces of the first and/or second connection element in the method step A),
- in which the adhesive is cured in the method step C).

24. Method according to one of Claims 20 to 22,
- with a metal layer being produced on at least one of the mutually opposite surfaces of the first and/or second connection element in the method step A),
- in which the metal layer is fused on in the method step C).

25. Optical system (80), containing
- at least one optical component (70) and
- at least one arrangement (5A, 5B, 5C, 5D) according to one of Claims 1 to 19, which is arranged in the beam path (70A) of the optical component (70).

26. Optical system according to the preceding claim,
- in which the optical component has a laser, in particular an HL wafer laser.

## Revendications

1. Ensemble (1) d'un composant micro-optique (5) sur un substrat (10), l'ensemble comprenant :
- un substrat (10),
- un composant micro-optique (5),
- un premier support intermédiaire (40), et
- une liaison de réglage entre le composant micro-optique et le substrat,
- dans lequel la liaison de réglage contient un premier (15) et un deuxième (20) élément de liaison qui comportent une première (15A) et une deuxième (20A) surface en contact, mutuellement adaptées, qui permettent un réglage dans différentes positions relatives, et qui permettent un basculement du composant micro-optique (5) vers l'avant, vers l'arrière et latéralement,
- dans lequel le premier (15) ou le deuxième (20) élément de liaison est disposé sur le premier support intermédiaire (40), ce qui autorise une rotation du composant micro-optique par rapport au premier support intermédiaire (40), et dans lequel le support intermédiaire (40) peut être déplacé librement sur le substrat (10),
- dans le premier support intermédiaire duquel il existe de plus un canal (55) s'étendant jusqu'à la surface du premier support intermédiaire (40), qui s'étend jusqu'à la première (15A) ou la deuxième (20A) surface de l'élément de liaison disposé sur le premier support intermédiaire,
- dans lequel, après avoir effectué avec succès le réglage des premier et deuxième éléments de liaison, ce canal (55) peut servir à fixer ceux-ci par l'application ultérieure d'un moyen de fixation, et dans lequel l'excédent de moyen de fixation peut s'échapper par l'intermédiaire de ce canal (55).

2. Ensemble (1) selon la revendication précédente,
- dans lequel la première surface (15A) du premier élément de liaison (15) est de forme convexe et la deuxième surface (20A) du deuxième élément de liaison (20) est de forme concave.

3. Ensemble selon une des revendications précédentes,
- dans lequel il existe des contacts ponctuels (30A) entre la première (15A) et la deuxième surface (20A).

4. Ensemble selon une des revendications précédentes,
- dans lequel il existe des contacts linéaires (30B) entre la première et la deuxième surface.

5. Ensemble selon une des revendications précédentes,
- dans lequel il existe des contacts plans (30C) entre la première et la deuxième surface.

6. Ensemble selon une des revendications 1, 2 ou 5,
- dans lequel la première (15A) et la deuxième surface (20A) ont des formes mutuellement complémentaires.

7. Ensemble selon une des revendications précédentes,
- dans lequel la surface du premier élément de liaison comporte une surface sphérique ou une partie de cette dernière.

8. Ensemble selon la revendication précédente,
- dans lequel le deuxième élément de liaison comporte une sphère creuse, dans laquelle repose le premier élément de liaison.

9. Ensemble selon une des revendications précédentes,
- dans lequel le support intermédiaire (40) comporte de plus une cavité (50) dont les surfaces intérieures sont une partie de la surface (20A) de l'élément de liaison (20) disposé sur le premier support intermédiaire.

10. Ensemble selon une des revendications précédentes,
- dans lequel le premier support intermédiaire (40) comporte deux branches (40A, 40B) et
- dans lequel le canal (55) s'étend vers la surface du premier support intermédiaire (40) entre les deux branches (40A, 40B) du premier support intermédiaire (40).

11. Ensemble selon une des revendications précédentes,
- dans lequel il existe un deuxième support intermédiaire (100) sur lequel le composant micro-optique (5) est disposé, ce support intermédiaire permettant un mouvement du composant micro-optique par rapport à la surface du substrat (10) tout en conservant une position relative entre le premier (15) et le deuxième (20) élément de liaison.

12. Ensemble selon une des revendications précédentes,
- dans lequel le deuxième élément de liaison comporte une surface de contact concave sur laquelle repose le premier élément de liaison avec les formes suivantes :
- surface conique, alésage cylindrique, ou rainure rectangulaire.

13. Ensemble selon une des revendications précédentes,
- dans lequel le premier élément de liaison (15) est appliqué contre le composant micro-optique (5).

14. Ensemble selon une des revendications précédentes,
- dans lequel au moins une surface du premier ou du deuxième élément de liaison comporte une couche de métal, de verre, de silicium ou de matière plastique.

15. Ensemble selon une des revendications précédentes,
- dans lequel le premier et deuxième élément de liaison sont rendus rugueux.

16. Ensemble selon une des revendications précédentes,
- dans lequel le composant micro-optique (5) est disposé dans un boîtier englobant soit le premier (15) soit le deuxième (20) élément de liaison.

17. Ensemble selon une des revendications précédentes,
- dans lequel le composant micro-optique (5) englobe un miroir laser, un filtre optique, des composants de polarisation, des doubleurs de fréquence, des plaquettes de retard ou une lentille.

18. Ensemble selon une des revendications précédentes,
- dans lequel le premier et deuxième élément de liaison sont fixés l'un par rapport à l'autre.

19. Ensemble selon la revendication précédente,
- dans lequel le premier et deuxième élément de liaison sont fixés à l'aide d'un moyen de fixation (65) choisi parmi :
- le métal et la colle.

20. Méthode pour le réglage d'un composant micro-optique (5) sur un substrat (10), avec les étapes suivantes :
A) préparation d'un ensemble (1) selon une des revendications 1 à 17,
B) suivi du réglage du composant micro-optique (5) par modification des positions mutuelles des éléments de liaison (15, 20).

21. Méthode selon la revendication précédente,
- dans laquelle les premier (15) et deuxième (20) éléments de liaison sont fixés l'un par rapport à l'autre dans une étape C) de la méthode se déroulant après B).

22. Méthode selon une des revendications 20 ou 21,
- dans laquelle on règle le composant micro-optique (5) au moyen d'un bras de préhension (60) dans un chemin optique (70A) d'un composant électronique (70) au cours de l'étape B) de la méthode.

23. Méthode selon une des revendications 20 à 22,
- dans laquelle on applique une colle durcissable sur au moins une des surfaces opposées du premier et/ou du deuxième élément de liaison au cours de l'étape A) de la méthode,
- dans laquelle on durcit la colle au cours de l'étape C) de la méthode.

24. Méthode selon une des revendications 20 à 22,
- dans laquelle on produit une couche de métal sur au moins une des surfaces opposées du premier et/ou du deuxième élément de liaison au cours de l'étape A) de la méthode,
- dans laquelle on fait fondre la couche de métal au cours de l'étape C) de la méthode.

25. Système optique (80) comportant
- au moins un composant optique (70) et
- au moins un ensemble (5A, 5B, 5C, 5D) selon une des revendications 1 à 19, disposé dans le chemin optique (70A) du composant optique (70).

26. Système optique selon la revendication précédente,
- dans lequel le composant optique comporte un laser, notamment un laser HL à disque.
